# EUROPÄISCHE PATENTSCHRIFT

(11) **EP 3 538 791 B1**
(45) Veröffentlichungstag und Bekanntmachung des Hinweises auf die Patenterteilung: **07.04.2021**
(21) Anmeldenummer: 17790681.5
(22) Anmeldetag: 25.10.2017
(51) Int. Cl.: F16H 57/02

(54) **GETRIEBE MIT EINEM ERSTEN GEHÄUSETEIL UND EINEM ZWEITEN GEHÄUSETEIL**
TRANSMISSION COMPRISING A FIRST HOUSING PART AND A SECOND HOUSING PART
BOÎTE DE VITESSES POURVUE D'UN PREMIER ÉLÉMENT CARTER ET D'UN DEUXIÈME ÉLÉMENT CARTER

(30) Priorität: 11.11.2016 DE 102016013396
(43) Veröffentlichungstag der Anmeldung: 18.09.2019
(73) Patentinhaber: SEW-Eurodrive GmbH & Co, 76646 Bruchsal (DE)
(72) Erfinder: HANNET, Stefan, 68723 Schwetzingen (DE); WÖPPERMANN, Markus, 76307 Karlsbad (DE)
(86) Internationale Anmeldenummer: PCT/EP2017/025319
(87) Internationale Veröffentlichungsnummer: WO 2018/086758

(56) Entgegenhaltungen:
- EP-A1- 0 121 021
- DE-A1- 4 116 791
- DE-A1-102005 049 666
- DE-A1-102006 062 645
- DE-A1-102012 111 487
- DE-A1-102015 003 047

## Beschreibung

Die Erfindung betrifft ein Getriebe mit einem ersten Gehäuseteil und einem zweiten Gehäuseteil.

Es ist allgemein bekannt, dass ein Getriebe ein Gehäuse aufweist.

**Aus der** DE 41 16 791 A1 **ist als nächstliegender Stand der Technik ein Motor mit angesetztem Getriebe bekannt.**

**Aus der** DE 10 2012 111 487 A1 **ist ein Verfahren zur Spieleinstellung bei einem Getriebe bekannt.**

**Aus der** DE 10 2006 062 645 A1 **ist eine Verbindungsvorrichtung bekannt.**

**Aus der** DE 10 2005 049 666 A1 **ist ein Wälzlager bekannt.**

**Aus der** DE 10 2015 003 047 A1 **ist ein Getriebe mit einer Planetengetriebestufe bekannt.**

**Aus der** EP 0 121 021 A1 **ist eine Förderrolle bekannt.**

Der Erfindung liegt daher die Aufgabe zugrunde, ein Getriebe mit einem ersten Gehäuseteil und einem zweiten Gehäuseteil weiterzubilden.

Erfindungsgemäß wird die Aufgabe bei dem Getriebe mit einem ersten Gehäuseteil und einem zweiten Gehäuseteil nach den in Anspruch 1 angegebenen Merkmalen gelöst. Wichtige Merkmale der Erfindung bei dem Getriebe mit einem ersten Gehäuseteil und einem zweiten Gehäuseteil sind, dass ein erstes und ein zweites Gehäuseteil mittels eines Spannrings zumindest kraftschlüssig verbunden sind.

Von Vorteil ist dabei, dass eine zerstörungsfrei wiederverwendbare Verbindung geschaffen ist, so dass ein mehrstufiges Getriebe in einfacher Weise zusammensetzbar ist. Denn in dem ersten Gehäuseteil ist eine erste Getriebestufe und in dem zweiten Gehäuseteil ist eine zweite Getriebestufe anordenbar. Dabei ist die kraftschlüssige Verbindung durch Aufweiten des Spannrings in einfacher Weise herstellbar.

Bei einer vorteilhaften Ausgestaltung weist der Spannring an einer Umfangsposition einen radial und/oder axial durchgehenden Schlitz auf. Von Vorteil ist dabei, dass ein einfaches Aufweiten ausführbar ist.

Bei einer vorteilhaften Ausgestaltung weist der Spannring eine Kegelfläche auf, mit welcher der Spannring an dem ersten Gehäuseteil flächig anliegt. Von Vorteil ist dabei, dass eine einfache Herstellung des Spannrings und der entsprechenden Auflagefläche am ersten Gehäuseteil durchführbar ist. Dabei ist der Kegelwinkel der Kegelfläche derart wählbar, dass eine möglichst geringe Reibung erreichbar ist.

Bei einer vorteilhaften Ausgestaltung ist der Spannflansch aufgeweitet vorgespannt und drückt an seinem radialen Außenumfang auf das zweite Gehäuseteil zum Herstellen der kraftschlüssigen Verbindung. Von Vorteil ist dabei, dass mittels der Spannschraube ein einfaches axiales Drücken des Spannflansches bewirkbar ist Somit wird der Spannring mit seiner Kegelfläche auf die am ersten Gehäuseteil entsprechend ausgeformte Kegelfläche gedrückt und somit radial aufgeweitet, so dass die kraftschlüssige Verbindung zum zweiten Gehäuseteil in einfacher Weise herstellbar ist.

Bei einer vorteilhaften Ausgestaltung ist der Spannring an seinem Außenumfang zylindrisch geformt. Von Vorteil ist dabei, dass das Aufweiten ein radiales Andrücken bewirkt, wobei eine große Andrückfläche, also Berührfläche, zwischen Spannring und erstem Gehäuseteil bewirkt wird.

Von Vorteil ist, dass ein axiales Andrücken in einfacher Weise ausführbar ist.

Von Vorteil ist, dass mittels der Spannschraube der Spannflansch in Richtung zum Lagerflansch hinziehbar ist, wobei der Spannflansch auf den Spannring drückt, welcher wiederum auf das erste Gehäuseteil drückt, das abgestützt ist am Lagerflansch. Dadurch wird der ebenfalls zwischen Spannflansch und Lagerflansch angeordnete Spannring auf der kegeligen, am ersten Gehäuseteil ausgeformten Auflagefläche radial aufgeweitet, so dass er auf eine Aufnahmefläche am zweiten Gehäuseteil drückt und somit eine kraftschlüssige Anbindung bewirkt. Zwischen Spannflansch und erstem Gehäuseteil ist also ein kleiner Abstand vorhanden, insbesondere also ein Spalt.

Bei einer vorteilhaften Ausgestaltung nimmt die radiale Wandstärke des Spannrings zum ersten Gehäuseteil hin ab. Von Vorteil ist dabei, dass eine einfache Ausführung als Kegelfläche ermöglicht ist.

Bei einer vorteilhaften Ausgestaltung nimmt die radiale Wandstärke des Spannrings zum Spannflansch hin ab, insbesondere wobei der Spannflansch eine entsprechende Kegelfläche aufweist zum flächigen Anliegen des Spannrings an dem Spannflansch. Von Vorteil ist dabei, dass eine einfache Herstellung der Kegelfläche ermöglicht ist.

Bei einer vorteilhaften Ausgestaltung weist die radiale Wandstärke ein Maximum auf, das entweder an einem axialen Rand des Spannrings angeordnet ist oder von den beiden axialen Rändern des Spannrings beabstandet ist. Von Vorteil ist dabei, dass beidseitig eine Kegelfläche am Spannring ausbildbar ist, insbesondere eine erste Kegelfläche und eine davon axial beabstandete oder angrenzende zweite Kegelfläche.

Bei einer vorteilhaften Ausgestaltung ist im Lagerflansch ein Lager einer Rotorwelle eines das Getriebe antreibenden Elektromotors aufgenommen. Von Vorteil ist dabei, dass ein Getriebemotor mit einem mehrstufigen Getriebe in einfacher Weise herstellbar ist.

Bei einer vorteilhaften Ausgestaltung ist das erste Gehäuseteil als Hohlrad einer ersten Planetengetriebestufe des Getriebes ausgebildet. Von Vorteil ist dabei, dass ein mehrstufiges Getriebe einfach herstellbar ist, indem eine erste Stufe im ersten Gehäuseteil anordenbar ist und mit diesem ersten Gehäuseteil ein weiteres Gehäuseteil verbindbar ist. Dieses kann entweder ein abtriebsseitiger Flansch oder ein zweites Gehäuseteil sein, das eine weitere Getriebestufe umfasst.

Bei einer vorteilhaften Ausgestaltung ist das zweite Gehäuseteil als Hohlrad einer zweiten Planetengetriebestufe des Getriebes ausgebildet. Von Vorteil ist dabei, dass eine zweite Stufe in einfacher Weise mit der ersten Stufe verbindbar ist, indem die beiden Gehäuseteile ineinandergesteckt und dann ein Kraftschluss hergestellt werden.

Bei einer vorteilhaften Ausgestaltung ist am zweiten Gehäuseteil eine Ringnut ausgebildet,
wobei der von der Ringnut überdeckte axiale Bereich den von dem Spannring überdeckten axialen Bereich umfasst. Von Vorteil ist dabei, dass zusätzlich zur kraftschlüssigen Verbindung ein Formschluss in axialer Richtung in einfacher Weise herstellbar ist.

Bei einer vorteilhaften Ausgestaltung ist der Spannring derart vorgespannt und/oder aufgeweitet, dass der Spannring in die Ringnut zumindest teilweise hineinragt. Von Vorteil ist dabei, dass ein Formschluss in einfacher Weise herstellbar ist.

Bei einer vorteilhaften Ausgestaltung ist mit der Verzahnung des als Hohlrad ausgeführten ersten Gehäuseteils die Verzahnung eines Planetenrades im Eingriff, welche auch mit der Verzahnung eines Sonnenrades im Eingriff ist, das drehfest verbunden ist mit der Rotorwelle des das Getriebe antreibenden Elektromotors,
wobei das Planentenrad drehbar gelagert ist auf einer Planetenradachse, die in einem Planetenradträger eingepresst ist. Von Vorteil ist dabei, dass die Erfindung bei einem mehrstufigen Planetengetriebe in einfacher Weise anwendbar ist.

Bei einer vorteilhaften Ausgestaltung ist ein weiteres Sonnenrad drehfest verbunden mit dem Planetenradträger,
wobei die Verzahnung eines weiteren Planetenrads im Eingriff ist mit der Verzahnung des Sonnenrads,
wobei die Verzahnung des weiteren Planetenrads auch im Eingriff ist mit der Verzahnung des als Hohlrad ausgeführten zweiten Gehäuseteils,
wobei das weitere Planetenrad drehbar gelagert ist auf einer Planetenradachse, die in einem als abtreibende Welle des Getriebes fungierenden Planetenradträger eingepresst ist. Von Vorteil ist dabei, dass die Erfindung bei einem mehrstufigen Planetengetriebe in einfacher Weise anwendbar ist.

Bei einer vorteilhaften Ausgestaltung ist der Spannring an seiner dem zweiten Gehäuseteil zugewandten radialen Außenumfang geriffelt, gerändelt und/oder verzahnt ausgeführt. Von Vorteil ist dabei, dass eine weitere Verbesserung der Verbindung erreichbar ist, insbesondere ist somit eine Verdrehsicherung erreicht.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:
In der Figur 1 ist ein Ausschnitt eines ersten erfindungsgemäßen Getriebemotors gezeigt, wobei ein Spannring zur kraftschlüssigen Verbindung zweier Gehäuseteile (3, 5) vorgesehen ist.

In der Figur 2 ist ein Bereich der Figur 1 vergrößert dargestellt.

In der Figur 3 ist der Spannring 2 in Schrägansicht dargestellt.

In der Figur 4 ist ein in Figur 1 alternativ verwendbarer Spannring 2 in Schrägansicht gezeigt.

In der Figur 5 ist ein Ausschnitt eines anderen erfindungsgemäßen Getriebemotors gezeigt, bei welchem ein anders geformter Spannring 2 verwendet ist.

In Figur 6 ist ein zur Figur 5 zugehöriger Spannring 2 gezeigt, der zwei Schrägen aufweist.

In Figur 7 ist ein Ausschnitt eines anderen erfindungsgemäßen Getriebemotors gezeigt, bei welchem der Spannring 2 vor dem Einfügen in eine am zweiten Gehäuseteil 5 eingebrachte Ringnut 70 gezeigt.

In Figur 8 ist im Gegensatz zur Figur 7 der Spannring 2 so weit axial eingeschoben, dass er in die Ringnut zumindest teilweise hineinragen kann.

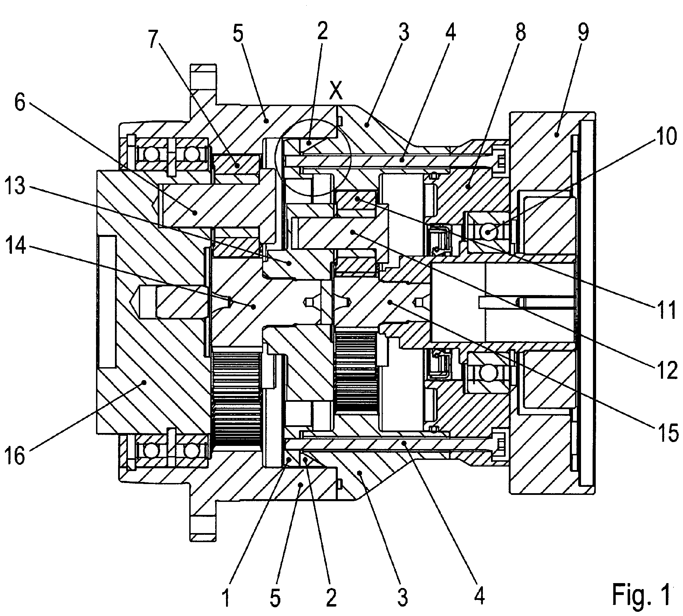

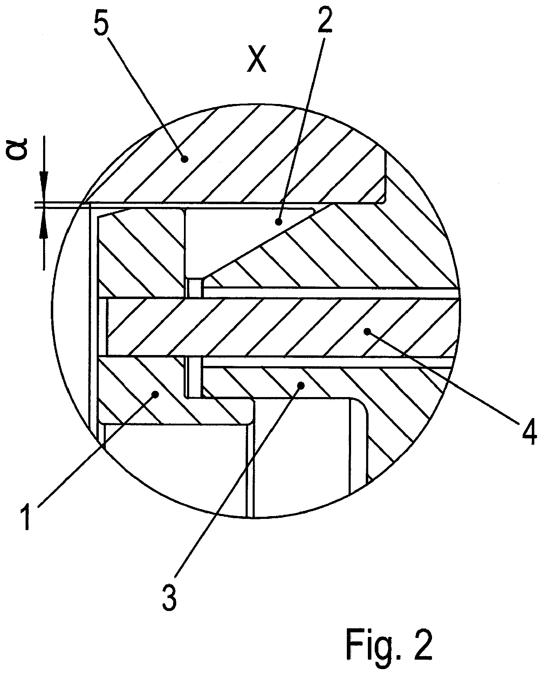

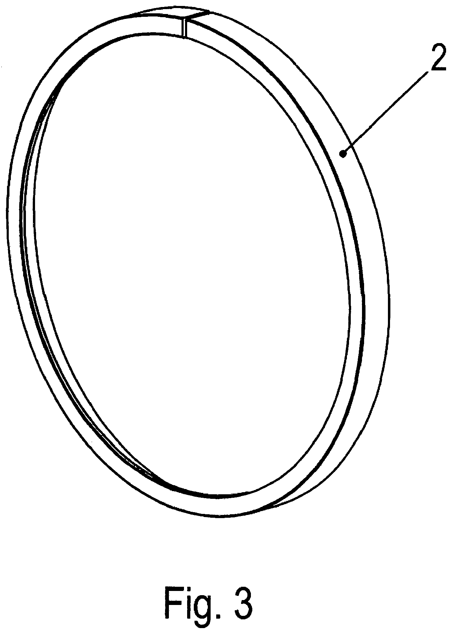

Wie in Figur 1 zusammen mit Figur 2 und Figur 3 gezeigt, wird ein Spannring 2 beim Verbinden von Gehäuseteilen (3, 4) verwendet.

Dabei weist der Getriebemotor einen Elektromotor auf, mit dessen Motorgehäuse 9 ein Lagerflansch 8 fest verbunden ist, insbesondere schraubverbunden ist. Im Lagerflansch 8 ist ein Lager 10 aufgenommen, welches die Rotorwelle des Elektromotors drehbar lagert relativ zum Lagerflansch 8.

Die Rotorwelle ist drehfest verbunden mit einem Sonnenrad 15, welches als eintreibendes Verzahnungsteil des Getriebes fungiert.

Das Getriebe ist beispielhaft als Planetengetriebe ausgeführt.

Die Verzahnung des Sonnenrads 15 ist im Eingriff mit der Verzahnung eines Planetenrads 11, welches mittels eines Lagers, insbesondere Nadellagers, auf einer Planetenradachse 12 drehbar gelagert ist.

Die Verzahnung des Planetenrads 7 steht außerdem im Eingriff mit der Verzahnung eines Hohlrades, welches als erstes Gehäuseteil 3 ausgebildet ist.

Die Planetenradachse 12 ist eingepresst in einen Planetenradträger 13, insbesondere in eine an einem Planetenradträger 13 ausgebildete Wange.

Der Planetenradträger 13 ist somit als abtreibende Welle der ersten Planetengetriebestufe ausgeführt und drehfest verbunden mit einem Sonnenrad 14 einer zweiten Planetengetriebestufe. Vorzugsweise ist das Sonnenrad 14 in den Planetenradträger 13 eingepresst.

Die Verzahnung des Sonnenrades 14 ist im Eingriff mit der Verzahnung eines Planetenrads 7, welches über Lager, insbesondere Nadellager, drehbar gelagert ist auf einer Planetenradachse, die in den Planetenradträger 16, welcher die abtreibende Welle darstellt, eingepresst verbunden ist.

Außerdem ist die Verzahnung des Planetenrads 7 im Eingriff mit der Verzahnung eines weiteren Hohlrades, das als zweites Gehäuseteil 5 ausgebildet ist.

Das erste Gehäuseteil 3 ist mit dem zweiten Gehäuseteil 5 kraftschlüssig verbunden, indem ein Spannring 2 eine Schrägfläche, also Schräge, aufweist, also eine Kegelfläche, die an einer entsprechenden Kegelfläche des ersten Gehäuseteils 3 anliegt.

Mittels einer axial gerichteten Spannschraube 4 wird der Spannring 2 axial zum ersten Gehäuseteil 3 hingedrückt. Hierfür ist die Spannschraube 4 mit ihrem Gewindebereich in eine in einem Spannflansch 1 eingebrachte, axial gerichtet Gewindebohrung eingeschraubt. Der am axial entgegengesetzten Endbereich angeordnete Schraubenkopf der Spannschraube 4 drückt
somit den Lagerflansch 8 auf dessen vom ersten Gehäuseteil 3 abgewandt angeordneten Seite zum ersten Gehäuseteil 3 hin. Da aber das erste Gehäuseteil 3 und der Lagerflansch 8 aneinander anliegen, wird der Spannring 2 von dem an ihm auf seiner vom ersten Gehäuseteil 3 abgewandten Seite anliegenden Spannflansch 1 axial gedrückt und somit auf der am ersten Gehäuseteil 3 ausgeformten Kegelfläche radial aufgeweitet, so dass der Spannring auf das zweite Gehäuseteil 5 drückt.

Hierzu ist wichtig, dass der vom Spannring 2 überdeckte axiale Bereich mit dem vom zweiten Gehäuseteil 5 überdeckten axialen Bereich überlappt. Der Spannring 2 liegt somit an seinem gesamten radialen Umfang am zweiten Gehäuseteil 5 an, welches hierzu in diesem Bereich eine zylindrische Aufnahmefläche aufweist.

Der vom ersten Gehäuseteil 3 überdeckte axiale Bereich überlappt mit dem vom zweiten Gehäuseteil 5 überdeckten Bereich. Somit ist der Spannring 2 radial zwischen den beiden Gehäuseteilen (3, 5) anordenbar. Durch axiales Andrücken des Spannrings 2 auf die Kegelfläche des ersten Gehäuseteils 3 wird ein radiales Aufweiten des Spannrings 2 bewirkt und somit eine kraftschlüssige Verbindung zwischen erstem und zweiten Gehäuseteil (3, 5) mittels des Spannrings 2.

Die Spannschraube 4 ist auf geringerem Radialabstand zur Drehachse der eintreibenden Welle, also auch zur Drehachse des Sonnenrades 15, angeordnet als der Spannring 2, insbesondere also auch als die Innenfläche des Spannrings 2.

Der Spannflansch 1 überdeckte Radialabstandsberiech überlappt einerseits mit dem vom Spannring 2 überdeckten Radialabstandsbereich und andererseits mit dem von der Spannschraube 4 überdeckten Radialabstandsberiech.

Das erste Gehäuseteil 3 ist in die am zweiten Gehäuseteil 5 ausgeformte Aufnahmeöffnung eingesteckt. Axial begrenzend wirkt eine am ersten Gehäuseteil 3 ausgebildete Stufe.

Das zweite Gehäuseteil 5 ist nicht nur das Hohlrad der zweiten Getriebestufe, sondern überdeckt auch den axialen Bereich, welcher von der zweiten Getriebestufe überdeckt wird. Ebenso ist das erste Gehäuseteil 3 nicht nur als Hohlrad ausgebildet, sondern überdeckt auch den axialen Bereich, welcher von der ersten Getriebestufe überdeckt wird.

Wie in Figur 2 und 3 gezeigt, ist die Ringachse des Spannrings 2 in axialer Richtung ausgerichtet.

Die radiale Wandstärke des Rings nimmt in axialer Richtung, also vom zweiten Gehäuseteil 5 zum Motor, insbesondere zum Lagerflansch 8 des Motors hin ab, da die Innenfläche des Spannrings 2 als Kegelfläche und die Außenfläche kreiszylindrisch, also mit konstantem Radius ausgeführt ist.

Der Spannring 2 weist an einer Umfangsposition einen radial und axial durchgehenden Schlitz auf, so dass das Aufweiten besonders einfach bewirkbar ist.

Der Planetenradträger 16 ist über in einem zweiten Gehäuseteil 5 aufgenommene Lager drehbar gelagert und fungiert als abtreibende Welle des Getriebes.

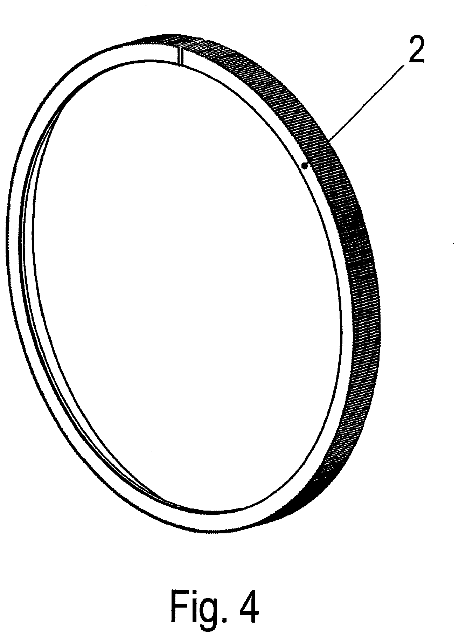

Wie in Figur 4 gezeigt, ist auch eine Riffelung oder Rändelung oder Verzahnung am äußeren Umfang des Spannrings 2 vorsehbar, so dass eine verbesserte Verbindung mit dem zweiten Gehäuseteil 5 bewirkbar ist.

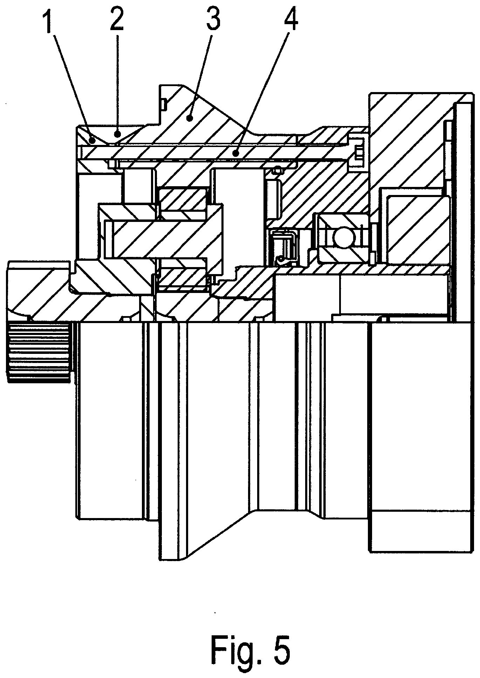

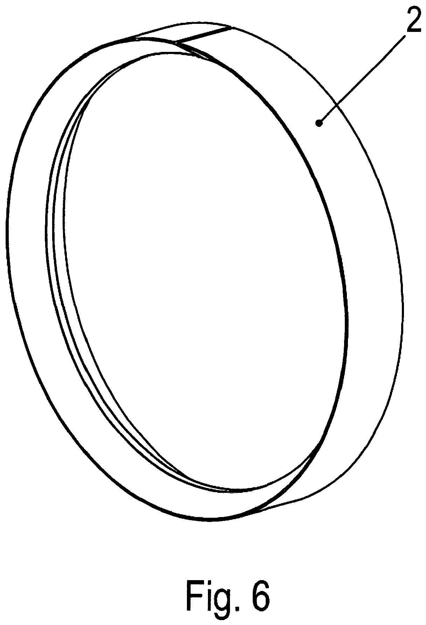

Wie in Figur 6 und Figur 5 gezeigt, ist aber alternativ auch ein anderer Spannring 2 verwendbar, der axial beidseitig eine Kegelfläche aufweist. Dabei ist die radial äußere Oberfläche ebenfalls wie in Figur 3 als zylindrische Fläche ausgeführt. Aber die radiale Wandstärke nimmt in axialer Richtung zunächst zu, insbesondere proportional zum axialen Abstand zum axialen Rand, und dann wieder ab, insbesondere ebenfalls proportional zum axialen Abstand zum anderen axialen Rand des Spannrings 2.

Somit ist als eine erste Kegelfläche am Spannring 2 ausgeführt, welche zum Spannflansch 1 hingewandt vorgesehen ist, und eine zweite Kegelfläche am Spannring 2 ausgeführt, welche zum ersten Gehäuseteil 3 hin vorgesehen ist.

Die Spitze der ersten Kegelfläche zeigt entgegengesetzt zur Spitze der zweiten Kegelfläche. Somit nimmt die radiale Wandstärke in axialer Richtung zu, bis ein Maximalwert erreicht ist und nimmt dann wieder ab.

Am Spannflansch 1 ist eine zur ersten Kegelfläche entsprechende Kegelfläche ausgebildet, so dass der Spannring 2 mit seiner ersten Kegelfläche flächig am Spannflansch 1 anliegt. Ebenso ist am ersten Gehäuseteil 3 eine zur zweiten Kegelfläche entsprechende Kegelfläche ausgebildet, so dass der Spannring 2 flächig am ersten Gehäuseteil 3 anliegt.

Somit wird beim Anziehen der Spannschraube 4 wiederum ein Aufweiten des Spannrings 2 zum Herstellen der kraftschlüssigen Verbindung mit dem zweiten Gehäuseteil 5 bewirkt, wobei allerdings durch die axial beidseitige Anordnung von Kegelflächen eine geringere Reibung bewirkbar ist und ein einfacheres Aufweiten erreichbar ist.

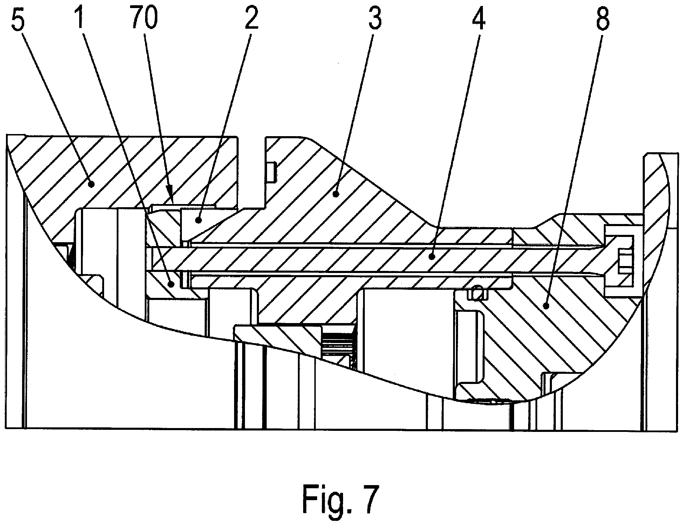

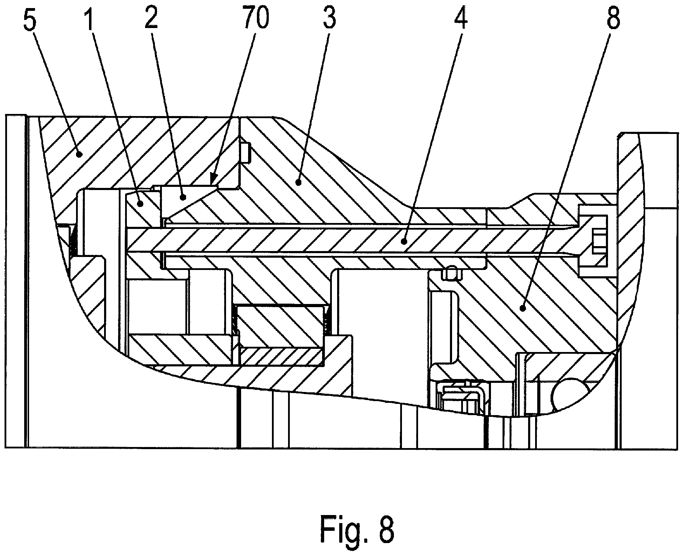

Wie in Figur 7 und Figur 8 gezeigt, ist zusätzlich am zweiten Gehäuseteil 5 eine Ringnut ausführbar, in welche der Spannring 2 beim Aufweiten hineingedrückt wird. Hierzu ist der vom Spannring 2 überdeckte axiale Bereich umfasst von dem von der Ringnut überdeckten axialen Bereich, wie in Figur 8 gezeigt. Figur 7 zeigt den Zustand während des Einsteckens des ersten Gehäuseteils 3 in das zweite Gehäuseteil 5, wobei der vom Spannring 2 überdeckte axiale Beriech noch nicht vollständig vom von der Ringnut 70 überdeckten axialen Beriech umfasst ist.

Der Spannring ist hier gemäß Figur 3 ausgeführt.

In weiteren erfindungsgemäßen Ausführungsbeispielen ist der Spannring 2 der Ausführung der Figur 7 und Figur 8 aber auch als Spannring 2 nach Figur 4 oder nach Figur 6 ausführbar.

Durch die Ringnut 70 ist zusätzlich zu der bewirkten formschlüssigen Verbindung in axialer Richtung ein Formschluss bewirkbar.

Zwischen erstem und zweitem Gehäuseteil (3, 5) ist eine Dichtung, insbesondere Flachdichtung oder O-Ring vorgesehen. Dabei ist die Dichtung auf größerem Radialabstand angeordnet als die Ringnut 70.

Bei weiteren Ausführungsbeispielen ist nur die erste oder die zweite Kegelfläche am Spannring 2 ausgebildet. Entsprechend weist dann der Spannflansch eine Kegelfläche auf oder nicht.

### Bezugszeichenliste

1 Spannflansch
2 Spannring
3 erstes Gehäuseteil, insbesondere Hohlrad
4 Schraube
5 zweites Gehäuseteil, insbesondere Hohlrad
6 Planetenradachse
7 Planetenrad
8 Lagerflansch
9 Motorgehäuse, insbesondere Statorgehäuse
10 Lager
11 Planetenrad
12 Planentenradachse
13 Planetenradträger
14 Sonnenrad
15 Sonnenrad
16 Planetenradträger
70 Ringnut

## Patentansprüche

1. Getriebe mit einem ersten Gehäuseteil (3) und einem zweiten Gehäuseteil (5),
**wobei** erstes und zweites Gehäuseteil (3, 5) mittels eines Spannrings (2) zumindest kraftschlüssig verbunden sind,
**dadurch gekennzeichnet, dass**
eine Spannschraube (4) mit ihrem Gewindeabschnitt in eine axial gerichtete
Gewindebohrung eines Spannflansches (1) eingeschraubt ist,
so, dass der Spannflansch (1) axial zum ersten Gehäuseteil (3) hingezogen wird und somit auf den Spannring (2) drückt,
ein Schraubenkopf der Spannschraube auf der vom ersten Gehäuseteil (3) abgewandten Seite eines Lagerflansches (8) anliegt,
wobei die Spannschraube durch eine axial durch den Lagerflansch und durch das erste Gehäuseteil (3) durchgehende Bohrung geführt ist,
wobei das erste Gehäuseteil (3) axial zwischen dem Spannflansch (1) und dem Lagerflansch (8) angeordnet ist.

2. Getriebe nach Anspruch 1,
**dadurch gekennzeichnet, dass**
der Spannring (2) an einer Umfangsposition einen radial und/oder axial durchgehenden Schlitz aufweist.

3. Getriebe nach mindestens einem der vorangegangenen Ansprüche,
**dadurch gekennzeichnet, dass**
der Spannring (2) eine Kegelfläche aufweist, mit welcher der Spannring (2) an dem ersten Gehäuseteil (3) flächig anliegt.

4. Getriebe nach mindestens einem der vorangegangenen Ansprüche,
**dadurch gekennzeichnet, dass**
**der Spannflansch (1)** aufgeweitet vorgespannt ist und an seinem radialen Außenumfang auf das zweite Gehäuseteil (5) drückt zum Herstellen der kraftschlüssigen Verbindung.

5. Getriebe nach mindestens einem der vorangegangenen Ansprüche,
**dadurch gekennzeichnet, dass**
der Spannring (2) an seinem Außenumfang zylindrisch geformt ist.

6. Getriebe nach mindestens einem der vorangegangenen Ansprüche,
**dadurch gekennzeichnet, dass**
die radiale Wandstärke des Spannrings (2) zum ersten Gehäuseteil (3) hin abnimmt
und/oder
die radiale Wandstärke des Spannrings (2) zum Spannflansch (1) hin abnimmt, insbesondere wobei der Spannflansch (1) eine entsprechende Kegelfläche aufweist zum flächigen Anliegen des Spannrings (2) an dem Spannflansch (1).

7. Getriebe nach mindestens einem der vorangegangenen Ansprüche,
**dadurch gekennzeichnet, dass**
die radiale Wandstärke ein Maximum aufweist, das entweder an einem axialen Rand des Spannrings (2) angeordnet ist oder von den beiden axialen Rändern des Spannrings (2) beabstandet ist.

8. Getriebe nach mindestens einem der vorangegangenen Ansprüche,
**dadurch gekennzeichnet, dass**
im Lagerflansch ein Lager einer Rotorwelle eines das Getriebe antreibenden Elektromotors aufgenommen ist.

9. Getriebe nach mindestens einem der vorangegangenen Ansprüche,
**dadurch gekennzeichnet, dass**
das erste Gehäuseteil (3) als Hohlrad einer ersten Planetengetriebestufe des Getriebes ausgebildet ist
und/oder dass
das zweite Gehäuseteil (5) als Hohlrad einer zweiten Planetengetriebestufe des Getriebes ausgebildet ist.

10. Getriebe nach mindestens einem der vorangegangenen Ansprüche,
**dadurch gekennzeichnet, dass**
am zweiten Gehäuseteil (5) eine Ringnut ausgebildet ist,
wobei der von der Ringnut überdeckte axiale Bereich den von dem Spannring (2) überdeckten axialen Bereich umfasst.

11. Getriebe nach mindestens einem der vorangegangenen Ansprüche,
**dadurch gekennzeichnet, dass**
der Spannring (2) derart vorgespannt und/oder aufgeweitet ist, dass der Spannring (2) in die Ringnut zumindest teilweise hineinragt.

12. Getriebe nach mindestens einem der vorangegangenen Ansprüche,
**dadurch gekennzeichnet, dass**
mit der Verzahnung des als Hohlrad ausgeführten ersten Gehäuseteils (3) die Verzahnung eines Planetenrades im Eingriff ist, welche auch mit der Verzahnung eines Sonnenrades im Eingriff ist, das drehfest verbunden ist mit der Rotorwelle des das Getriebe antreibenden Elektromotors,
wobei das Planentenrad drehbar gelagert ist auf einer Planetenradachse (6), die in einem Planetenradträger eingepresst ist,
und/oder dass
ein weiteres Sonnenrad (15) drehfest verbunden ist mit dem Planetenradträger,
wobei die Verzahnung eines weiteren Planetenrads im Eingriff ist mit der Verzahnung des Sonnenrads (14),
wobei die Verzahnung des weiteren Planetenrads auch im Eingriff ist mit der Verzahnung des als Hohlrad ausgeführten zweiten Gehäuseteils (5),
wobei das weitere Planetenrad drehbar gelagert ist auf einer Planetenradachse (6), die in einem als abtreibende Welle des Getriebes fungierenden Planetenradträger eingepresst ist.

13. Getriebe nach mindestens einem der vorangegangenen Ansprüche,
**dadurch gekennzeichnet, dass**
der Spannring (2) an seiner dem zweiten Gehäuseteil zugewandten radialen Außenumfang geriffelt, gerändelt und/oder verzahnt ausgeführt ist.

## Claims

1. A gear unit having a first housing part (3) and a second housing part (5),
wherein the first and second housing parts (3, 5) are connected at least non-positively by means of a clamping ring (2),
**characterised in that**
a clamping screw (4) is screwed with its threaded portion into an axially directed threaded bore of a clamping flange (1),
such that the clamping flange (1) is pulled axially towards the first housing part (3) and thus presses on the clamping ring (2),
a screw head of the clamping screw lies against the side of a bearing flange (8) which faces away from the first housing part (3),
the clamping screw being guided through a bore which is axially uninterrupted through the bearing flange and through the first housing part (3),
the first housing part (3) being arranged axially between the clamping flange (1) and the bearing flange (8).

2. A gear unit according to Claim 1,
**characterised in that**
the clamping ring (2) has a radially and/or axially uninterrupted slot at a circumferential position.

3. A gear unit according to at least one of the preceding claims,
**characterised in that**
the clamping ring (2) has a conical surface by which the clamping ring (2) lies in planar manner against the first housing part (3).

4. A gear unit according to at least one of the preceding claims,
**characterised in that**
the clamping flange (1) is pre-loaded and expanded and on its radial outer periphery presses on the second housing part (5) to produce the non-positive connection.

5. A gear unit according to at least one of the preceding claims,
**characterised in that**
the clamping ring (2) is formed cylindrically on its outer periphery.

6. A gear unit according to at least one of the preceding claims,
**characterised in that**
the radial wall thickness of the clamping ring (2) decreases towards the first housing part (3)
and/or
the radial wall thickness of the clamping ring (2) decreases towards the clamping flange (1), in particular wherein the clamping flange (1) has a corresponding conical surface for the clamping ring (2) to lie in planar manner against the clamping flange (1).

7. A gear unit according to at least one of the preceding claims,
**characterised in that**
the radial wall thickness has a maximum which is either located on an axial edge of the clamping ring (2) or is spaced apart from the two axial edges of the clamping ring (2).

8. A gear unit according to at least one of the preceding claims,
**characterised in that**
a bearing of a rotor shaft of an electric motor which drives the gear unit is accommodated in the bearing flange.

9. A gear unit according to at least one of the preceding claims,
**characterised in that**
the first housing part (3) is designed as a ring gear of a first planetary gear stage of the gear unit
and/or **in that**
the second housing part (5) is designed as a ring gear of a second planetary gear stage of the gear unit.

10. A gear unit according to at least one of the preceding claims,
**characterised in that**
an annular groove is formed on the second housing part (5),
the axial region covered by the annular groove comprises the axial region covered by the clamping ring (2).

11. A gear unit according to at least one of the preceding claims,
**characterised in that**
the clamping ring (2) is pre-loaded and/or expanded such that the clamping ring (2) protrudes at least in part into the annular groove.

12. A gear unit according to at least one of the preceding claims,
**characterised in that**
the gearing of a planet gear is engaged with the gearing of the first housing part (3) which is embodied as a ring gear, which gearing of the planet gear is also engaged with the gearing of a sun gear which is connected non-rotatably to the rotor shaft of the electric motor which drives the gear unit,
wherein the planet gear is rotatably mounted on a planet gear spindle (6) which is pressed into a planet carrier,
and/or **in that**
a further sun gear (15) is connected non-rotatably to the planet carrier,
with the gearing of a further planet gear being engaged with the gearing of the sun gear (14),
with the gearing of the further planet gear also being engaged with the gearing of the second housing part (5) which is embodied as a ring gear,
with the further planet gear being rotatably mounted on a planet gear spindle (6) which is pressed into a planet carrier which functions as an output shaft of the gear unit.

13. A gear unit according to at least one of the preceding claims,
**characterised in that**
the clamping ring (2) is fluted, knurled and/or toothed on its radial outer periphery facing the second housing part.

## Revendications

1. Transmission comprenant une première partie (3) de carter et une seconde partie (5) de carter,
lesdites première et seconde parties (3, 5) du carter étant reliées au moins par engagement positif, au moyen d'une bague de serrage (2),
**caractérisée par le fait**
**qu'**une vis de serrage (4) est vissée par sa région filetée dans un perçage taraudé d'une bride de serrage (1), dirigé axialement,
de telle sorte que ladite bride de serrage (1) soit attirée axialement vers la première partie (3) du carter, et exerce ainsi une pression sur la bague de serrage (2),
une tête de ladite vis de serrage étant en applique contre le côté d'une bride de montage (8) tourné à l'opposé de ladite première partie (3) du carter,
ladite vis de serrage étant guidée par un alésage qui traverse, de part en part, ladite bride de montage et ladite première partie (3) du carter dans le sens axial,
laquelle première partie (3) du carter est interposée axialement entre la bride de serrage (1) et ladite bride de montage (8).

2. Transmission selon la revendication 1,
**caractérisée par le fait que**
la bague de serrage (2) est pourvue, en un emplacement de son pourtour, d'une fente ininterrompue radialement et/ou axialement.

3. Transmission selon au moins l'une des revendications précédentes,
**caractérisée par le fait que**
la bague de serrage (2) est munie d'une surface tronconique, par laquelle ladite bague de serrage (2) porte à plat contre la première partie (3) du carter.

4. Transmission selon au moins l'une des revendications précédentes,
**caractérisée par le fait que**
la bride de serrage (1) est précontrainte avec expansion et exerce une pression sur la seconde partie (5) du carter, par son pourtour extérieur radial, en vue d'instaurer la liaison par engagement positif.

5. Transmission selon au moins l'une des revendications précédentes,
**caractérisée par le fait que**
la bague de serrage (2) est de forme cylindrique sur son pourtour extérieur.

6. Transmission selon au moins l'une des revendications précédentes,
**caractérisée par le fait que**
l'épaisseur de paroi radiale de la bague de serrage (2) s'amenuise en direction de la première partie (3) du carter,
et/ou
ladite épaisseur de paroi radiale de la bague de serrage (2) s'amenuise en direction de la bride de serrage (1), sachant notamment que ladite bride de serrage (1) est dotée d'une surface tronconique correspondante, de façon telle que ladite bague de serrage (2) porte à plat contre ladite bride de serrage (1).

7. Transmission selon au moins l'une des revendications précédentes,
**caractérisée par le fait que**
l'épaisseur de paroi radiale présente un maximum qui est situé sur un bord axial de la bague de serrage (2), ou bien est situé à distance des deux bords axiaux de ladite bague de serrage (2).

8. Transmission selon au moins l'une des revendications précédentes,
**caractérisée par le fait**
**qu'**un palier d'un arbre rotorique d'un moteur électrique, entraînant ladite transmission, est intégré dans la bride de montage.

9. Transmission selon au moins l'une des revendications précédentes,
**caractérisée par le fait que**
la première partie (3) du carter est réalisée sous la forme d'un pignon creux d'un premier étage d'engrenage planétaire de ladite transmission ;
et/ou **par le fait que**
la seconde partie (5) dudit carter est réalisée sous la forme d'un pignon creux d'un second étage d'engrenage planétaire de ladite transmission.

10. Transmission selon au moins l'une des revendications précédentes,
**caractérisée par le fait**
**qu'**une rainure annulaire est pratiquée dans la seconde partie (5) du carter,
sachant que la région axiale, couverte par ladite rainure annulaire, englobe la région axiale couverte par la bague de serrage (2).

11. Transmission selon au moins l'une des revendications précédentes,
**caractérisée par le fait que**
la bague de serrage (2) est soumise à une précontrainte et/ou à une expansion telle(s) que ladite bague de serrage (2) pénètre, au moins en partie, dans la rainure annulaire.

12. Transmission selon au moins l'une des revendications précédentes,
**caractérisée par le fait que**
la denture d'un pignon satellite, en prise avec la denture de la première partie (3) du carter réalisée sous la forme d'un pignon creux, est également en prise avec la denture d'une roue planétaire reliée, avec verrouillage rotatif, à l'arbre rotorique du moteur électrique entraînant ladite transmission,
ledit pignon satellite étant monté à rotation sur un axe (6) emboîté à force dans un porte-satellites ;
et/ou **par le fait**
**qu'**une roue planétaire (15) supplémentaire est reliée audit porte-satellites avec verrouillage rotatif,
la denture d'un pignon satellite supplémentaire étant en prise avec la denture de la roue planétaire (14),
la denture dudit pignon satellite supplémentaire étant également en prise avec la denture de la seconde partie (5) du carter, réalisée sous la forme d'un pignon creux,
ledit pignon satellite supplémentaire étant monté à rotation sur un axe (6) emboîté à force dans un porte-satellites remplissant la fonction d'un arbre de sortie de ladite transmission.

13. Transmission selon au moins l'une des revendications précédentes,
**caractérisée par le fait que**
la bague de serrage (2) est de réalisation striée, moletée et/ou dentée sur son pourtour extérieur radial tourné vers la seconde partie du carter.
